(19) **Europäisches Patentamt / European Patent Office / Office européen des brevets**

(11) **EP 2 387 591 B1**

(12) # FASCICULE DE BREVET EUROPEEN

(45) Date de publication et mention de la délivrance du brevet:
**17.10.2012 Bulletin 2012/42**

(21) Numéro de dépôt: **09807447.9**

(22) Date de dépôt: **23.12.2009**

(51) Int Cl.:
**C08F 220/06** *(2006.01)* **C08F 220/38** *(2006.01)*
**C08F 230/02** *(2006.01)* **C09K 8/508** *(2006.01)*

(86) Numéro de dépôt international:
**PCT/FR2009/001481**

(87) Numéro de publication internationale:
**WO 2010/081944 (22.07.2010 Gazette 2010/29)**

(54) **COPOLYMERE POUR L'INHIBITION DES DEPOTS INORGANIQUES**

COPOLYMER ZUR INHIBIERUNG VON ANORGANISCHEN ABLAGERUNGEN

COPOLYMER FOR INHIBITING INORGANIC DEPOSITS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **16.01.2009 US 145254 P**

(43) Date de publication de la demande:
**23.11.2011 Bulletin 2011/47**

(73) Titulaires:
• **IFP Energies nouvelles**
  **92852 Rueil-Malmaison Cedex (FR)**
• **Rhodia Opérations**
  **93306 Aubervilliers (FR)**

(72) Inventeurs:
• **ADAM, Hervé**
  **Clarksburg**
  **NJ 08510 (US)**

• **LABARRE, Dominique**
  **F-92200 Neuilly sur Seine (FR)**
• **WILSON, James**
  **60580 Coye la Foret (FR)**
• **ARGILLIER, Jean-François**
  **F-92500 Rueil Malmaison (FR)**
• **BAZIN, Brigitte**
  **F-75017 Paris (FR)**
• **GATEAU, Patrick**
  **F-78310 Maurepas (FR)**
• **HERZHAFT, Benjamin**
  **F-92150 Suresnes (FR)**

(56) Documents cités:
**FR-A1- 2 868 783    FR-A1- 2 917 747**

EP 2 387 591 B1

**Description**

**Domaine de l'invention**

L'invention concerne l'inhibition des dépôts inorganiques (tartre par exemple), notamment dans les réservoirs pétroliers, plus particulièrement dans des conditions HP/HT, c'est à dire haute pression et haute température.

Les réservoirs HP/HT sont définis comme ceux ayant généralement une haute salinité, une température au moins égale à 150°C et des pressions pouvant dépasser 70 bars , par exemple les réservoirs "offshore".

De nombreuses opérations dans l'industrie pétrolière peuvent donner lieu à des dépôts inorganiques, particulièrement les opérations de production, stimulation des puits de production et transport. La plupart des dépôts inorganiques dans le domaine pétrolier sont liés soit à la précipitation directe qui se produit naturellement dans les roches réservoirs, soit à la sursaturation de l'eau de production qui se produit lorsque deux eaux incompatibles se rencontrent en fond de puits.

Les dépôts peuvent consister en des dépôts de carbonate de calcium, sulfate de baryum, sulfate de calcium, sulfate de strontium, carbonate de fer, oxydes de fer, sulfates de fer et sels de magnésium. Des dépôts de silice peuvent également avoir lieu, particulièrement dans les techniques de récupération assistée par la vapeur (SAGD : Steam Assisted Gravity Drainage).

Des problèmes spécifiques sont liés aux conditions HP/HT. Des dépôts de composition variée peuvent intervenir dans les puits HP/HT, notamment des dépôts de type minéral comme le sulfate de baryum, le sulfate de strontium et le sulfate de calcium. Le problème des dépôts de carbonate (notamment de calcium) est très spécifique, en raison de la diminution drastique de la solubilité du carbonate de calcium lorsque la température augmente. L'effet principal est dû au dégazage de $CO_2$ lors de la diminution de pression pendant le procédé de production et à la haute salinité (haute concentration en calcium) dans les eaux de formation présentes dans les réservoirs HP/HT.

Des dépôts très spécifiques peuvent également être notés, notamment dans le cas où les puits produisent du gaz depuis le réservoir. Ce sont des dépôts de halite qui sont dus à une très haute salinité de l'eau associée à la production de gaz et à l'évaporation d'eau à proximité du puits. Le traitement de ces dépôts est généralement réalisé par lavage du fond du puits avec de l'eau provenant de l'aquifère, ou de faible salinité, voire avec de l'eau désulfatée.

Par ailleurs, les lignes de production dans les réservoirs HP/HT sont soumises à de grandes variations de température, particulièrement en offshore. En fond de puits, la température peut être haute (150°C), mais en fond de mer, la température peut avoisiner les 4°C, ce qui implique des gradients de température importants sur des distances qui peuvent atteindre plusieurs milliers de mètres. Dans ce cas, la localisation des dépôts inorganiques résulte à la fois d'effets thermodynamiques et cinétiques dont les amplitudes dépendent de la température. Par exemple, pour le sulfate de baryum : la solubilité augmente avec la température, ce qui rend le dépôt très probable à basse température, mais la vitesse de précipitation diminue avec la température, ce qui limite l'étendue de la précipitation.

Le lavage du puits par injection d'eau désulfatée (20-100 mg/l) ne résout cependant pas tous les problèmes. Même quand la concentration en sulfate est réduite dans l'eau de mer injectée, des dépôts de sulfate de baryum peuvent se produire, mais en quantités plus faibles. Pour ces raisons, un inhibiteur de formation des dépôts inorganiques est généralement ajouté dans l'eau de lavage pour prévenir tout risque de formation de précipités (généralement des sulfates) quand l'eau de l'aquifère est mélangée avec de la saumure de haute salinité.

Les inhibiteurs de dépôt empêchent la précipitation selon deux principaux mécanismes :

- inhibition de la nucléation : ils agissent comme des agents dispersants pour éviter le formation des noyaux;
- inhibition de la croissance : ils empêchent la croissance des cristaux par adsorption sur les sites cristallins. Ils peuvent agir comme des agents dispersants pour limiter l'agrégation.

Les molécules des inhibiteurs de dépôt doivent avoir des tailles adaptées à la taille cristallographique du sel désigné. Il est généralement considéré que les phosphonates sont des inhibiteurs de croissance des cristaux, tandis que les polymères agissent comme des dispersants. La plupart des produits commerciaux sont des mélanges d'inhibiteurs de croissance et de nucléation. Les inhibiteurs de dépôt sont efficaces à de très faibles concentrations. Il existe une concentration seuil d'efficacité appelée Concentration Minimum d'Inhibition (MIC en anglais).

Rétention de l'inhibiteur

Les inhibiteurs de dépôt sont retenus au fond du puits selon deux principaux mécanismes: rétention par adsorption et/ou rétention par précipitation. Les mécanismes de rétention dépendent de la nature chimique du produit, de la concentration et de paramètres dépendants du réservoir comme la composition de l'eau du réservoir, la minéralogie de la roche, le pH et la température. Le procédé d'adsorption implique des mécanismes d'adsorption électrostatiques ou par liaison de type Van der Waals. Le pH et la concentration en ion divalent (calcium) sont les facteurs prédominants pour augmenter l'adsorption. Dans certains cas, les cations divalents sont en outre responsables d'une précipitation de surface ou en masse, ce qui augmente la rétention.

**Art antérieur**

Les méthodes actuelles pour inhiber la formation des dépôts inorganiques mettent en oeuvre des composés contenant du phosphore, et le plus souvent des polymères, de masse moléculaire généralement inférieure à 10000, de type acide carboxylique, acides sulfoniques, polyamides.

Le champ d'application majoritaire de ces méthodes est le traitement des eaux industrielles.

Par exemple, des acides organiques phosphoniques sont décrits dans les documents US 6 063 289 et US 6 123 869. Des polymères acryliques contenant un groupement phosphinate ou phosphonate peuvent également être utilisés, par exemple un copolymère d'acide méthacrylique ayant une fonctionnalité phosphate pour le traitement des eaux industrielles (US 4 209 398). Cependant, l'utilisation de tels inhibiteurs n'est pas satisfaisante d'un point de vue environnemental et des solutions alternatives ont été recherchées.

Le document WO2003/029153 décrit des compositions permettant l'inhibition des dépôts inorganiques dans le domaine pétrolier au moyen de terpolymères comprenant un monomère phosphate, le méthallyl hydroxy phosphate.

On a mis en évidence que les trois unités monomères comprises dans le copolymère selon la présente invention collaboraient à un effet synergique pour l'inhibition des dépôts inorganiques. La composition inhibitrice comprenant le copolymère selon l'invention présente en effet des propriétés améliorées par rapport aux solutions de l'art antérieur, notamment pour les applications de traitement des dépôts inorganiques dans les réservoirs HP/HT, en raison de ses caractéristiques de stabilité chimique dans des conditions de haute pression/haute température, de concentration minimum d'inhibition et d'adsorption sur solide et également en raison de son profil environnemental satisfaisant. De plus, le copolymère selon l'invention présente une biodégradabilité améliorée par rapport à la plupart des produits utilisés dans ce type d'application.

**Description de l'invention**

Par simplification, on dénommera ci-après par "monomère (i)" le ou les monomères dont dérivent les unités monomères (i).

**Résumé de l'invention**

L'invention concerne un copolymère comprenant :

A. au moins une unité monomère a) dérivée d'au moins un acide aliphatique monocarboxylique ou polycarboxylique éthyléniquement insaturé, d'un anhydride correspondant ou d'un sel hydrosoluble correspondant; et

B. au moins une unité monomère b) dérivée d'un éther éthyléniquement insaturé sulfoné ou sulfaté de formule (I)

$$CH_2 = C(R^1)\text{-}C(R^2)(R^3)\text{-}O\text{-}R'\text{-}Y^-\text{-}X^+ \qquad (I)$$

formule dans laquelle les différents symboles ont la signification suivante :

- R$^1$, R$^2$ et R$^3$, semblables ou différents, représentent

  ○ un atome d'hydrogène ou
  ○ un radical alkyle

- R' représente un radical aliphatique divalent, linéaire ou ramifié, portant au moins un substituant OH
- Y$^-$ représente $SO_3^-$ ou $SO_4^-$
- X est un contre-ion.

ou au moins une unité monomère (b') dérivée d'un monomère sulfoné éthyléniquement insaturé, autre que (b), de formule (II)

$$CH_2 = C(R^1)\text{-}(Z)_n\text{-}R''\text{-}SO_3^-\ X^+ \qquad (II)$$

formule dans laquelle les différents symboles ont la signification suivante :

- $R^1$ représente

    ○ un atome d'hydrogène ou
    ○ un radical alkyle

- n est égal à 0 ou 1 '
- Z représente un groupe divalent de formule - C(O) - N($R^4$) - $R^5$ -, où

    ○ $R^4$ représente un atome d'hydrogène ou un radical alkyle
    ○ $R^5$ représente un radical divalent aliphatique, linéaire ou ramifié

- R" représente un radical aliphatique divalent, linéaire ou ramifié,
- X est un contre-ion, et

C) au moins une unité monomère (c) dérivée d'un monomère de formule générale moyenne $[CH_2=CH-CH_2-R^6-O-]_x P(=O)(OM)_{3-x}$ (III),
dans laquelle :

■ $R^6$ est un groupe organique divalent comportant des atomes de carbone et d'hydrogène et éventuellement des hétéroatomes, de préférence l'oxygène et l'azote, de préférence un groupe (poly)oxyalkylene.
■ x est un nombre entier ou décimal compris entre 1 et 2, bornes inclues ou exclues.
■ M, identique ou différent, est un atome d'hydrogène ou un contre-ion cationique.

De préférence, dans la formule (I) représentative du monomère (b):

- $R^1$ représente

    ○ un atome d'hydrogène ou
    ○ un radical alkyle contenant de 1 à 6 atomes de carbone, de préférence de 1 à 3 atomes de carbone, tout particulièrement 1 atome de carbone

- $R^2$ et $R^3$, semblables ou différents, représentent

    ○ un atome d'hydrogène ou
    ○ un radical alkyle contenant de 1 à 6 atomes de carbone, de préférence de 1 à 3 atomes de carbone
    • R' représente un radical aliphatique divalent, linéaire ou ramifié, portant au moins un substituant OH et contenant de 1 à 6 atomes de carbone, tout particulièrement 3 atomes de carbone
    • $Y^-$ représente $SO_3^-$ ou $SO_4^-$, tout préférentiellement $SO_3^-$
    • X est un contre-ion hydrogène, métal alcalin ou ammonium.

De manière préférée, le monomère (b) est choisi parmi les acides 3-(meth)allyloxy-2-hydroxy-1-propanesulfoniques et leurs sels hydrosolubles, le sulfate d'ammonium et de 1-(allyloxy)-2-hydroxypropyle (ou « ammonium 1-(allyloxy)-2-hydroxypropyl sulphate »).
De manière très préférée, le monomère (b) est le sel de sodium de l'acide 1-allyloxy-2-hydroxy-1-propanesulfonique (AHPS).
Avantageusement, dans la formule (II) représentative du monomère (b') :

- $R^1$ représente

    ○ un atome d'hydrogène ou
    ○ un radical alkyle

- n est égal à 0 ou 1
- Z représente un groupe divalent de formule - C(O)-N($R^4$)-$R^5$-, où

    ○ $R^4$ représente un atome d'hydrogène ou un radical alkyle

○ R$^5$ représente un radical divalent aliphatique, linéaire ou ramifié

- R" représente un radical aliphatique divalent, linéaire ou ramifié,
- X est un contre-ion.

De préférence :

- R$^1$ représente

  ○ un atome d'hydrogène ou
  ○ un radical alkyle contenant de 1 à 6 atomes de carbone, de préférence de 1 à 3 atomes de carbone, en particulier 1 atome de carbone

- n est égal à 0 ou 1 ; de préférence n est égal à 1
- Z représente un groupe divalent de formule - C(O) - N(R$^4$)-R$^5$-, où :

  ○ R$^4$ représente un atome d'hydrogène ou un radical alkyle contenant de 1 à 4 atomes de carbone
  ○ R$^5$ représente un radical divalent aliphatique, linéaire ou ramifié contenant de 1 à 8 atomes de carbone, de préférence un radical - C(CH$_3$)$_2$-

- R" représente un radical aliphatique divalent, linéaire ou ramifié, contenant de préférence de 1 à 7 atomes de carbone, tout particulièrement 1 atome de carbone
- X est un contre-ion hydrogène, métal alcalin ou ammonium.

De manière très préférée, le monomère (b') est choisi parmi :

- le vinyl sulfonate de sodium (SVS)
- l'acide 2-méthyl-2-propène-1-sulfonique (SMS)
- l'acide 2-acrylamide-2-méthyl-1-propanesulfonique (AMPS)

et leurs sels hydrosolubles.

Avantageusement, l'unité monomère (a) est dérivée d'un monomère (a) choisi parmi l'acide acrylique, l'acide méthacrylique, l'anhydride maléique ou leurs sels hydrosolubles.

De manière très préférée, le monomère a) est choisi parmi l'acide acrylique ou l'anhydride maléique.

Avantageusement, dans la formule (III) représentative du monomère (c), R6 est un groupe (poly)oxyalkylene de formule -[O-A-]$_n$-, dans lequel :

- A est un groupe de formule -CH$_2$-CH$_2$- ou -CH$_2$-CH(CH$_3$)- ou -CH(CH$_3$)-CH$_2$-, et
- n est un nombre moyen au moins égal à 1.

De préférence, R6 est un groupe polyoxyethylene de formule -[O-CH$_2$-CH$_2$]$_n$-, dans lequel n est un nombre moyen compris entre 2 et 10.

De manière très préférée, l'unité monomère (c) est dérivée du monomère (c) polyoxyethylene alkyl ether phosphate (PAM 5000).

Avantageusement, les unités monomères (a) représentent entre 20% et 80% (en % molaire des monomères polymérisés), les unités monomères (b) ou (b') représentent entre 10% et 70 % (en % molaire des monomères polymérisés) et les unités monomères (c) représentent entre 10% et 70 % (en % molaire des monomères polymérisés), plus préférentiellement les unités monomères (a) représentent entre 40% et 80% (en % molaire des monomères polymérisés), les unités monomères (b) ou (b') représentent entre 10% et 50% (en % molaire des monomères polymérisés) et les unités monomères (c) représentent entre 10% et 50% (en % molaire des monomères polymérisés).

La masse moléculaire moyenne (exprimée en poids) du copolymère selon l'invention est comprise de préférence entre 1000 et 50000 g/mol, de manière très préférée comprise entre 2000 et 25000 g/mol.

L'invention concerne également un procédé de préparation d'un copolymère tel que décrit précédemment comprenant :

A) au moins une unité monomère a)
B) au moins une unité monomère b)
C) au moins une unité monomère c)

par polymérisation par voie radicalaire en présence d'un amorceur de polymérisation qui est un initiateur de radicaux libres de :

a) au moins un acide aliphatique monocarboxylique ou polycarboxylique éthyléniquement insaturé, un anhydride correspondant ou un sel hydrosoluble correspondant.

b) au moins un éther éthyléniquement insaturé sulfoné ou sulfaté de formule (I)

$$CH_2 = C(R^1)\text{-}C(R^2)(R^3)\text{-}O\text{-}R'\text{-}Y^-\text{-}X^+ \qquad (I)$$

formule dans laquelle les différents symboles ont la signification suivante :

- $R^1$, $R^2$ et $R^3$, semblables ou différents, représentent
  - ○ un atome d'hydrogène ou
  - ○ un radical alkyle

- R' représente un radical aliphatique divalent, linéaire ou ramifié, portant au moins un substituant OH
- $Y^-$ représenté $SO_3^-$ ou $SO_4^-$
- X est un contre-ion,

ou au moins un monomère sulfoné éthyléniquement insaturé (b'), autre que (b), de formule (II)

$$CH_2 = C(R^1)\text{-}(Z)_n\text{-}R''\text{-}SO_3^-\ X^+ \qquad (II)$$

formule dans laquelle les différents symboles ont la signification suivante :

- $R^1$ représente
  - ○ un atome d'hydrogène ou
  - ○ un radical alkyle

- n est égal à 0 ou 1
- Z représente un groupe divalent de formule -C(O)-N($R^4$)-$R^5$-, où
  - ○ $R^4$ représente un atome d'hydrogène ou un radical alkyle
  - ○ $R^5$ représente un radical divalent aliphatique, linéaire ou ramifié

- R'' représente un radical aliphatique divalent, linéaire ou ramifié,
  X est un contre-ion, et

c) au moins un monomère (c) de formule générale moyenne $[CH_2{=}CH{-}CH_2{-}R^6{-}O{-}]_xP({=}O)(OM)_{3{-}x}$, (III)

dans laquelle :

- ■ $R^6$ est un groupe organique divalent comportant des atomes de carbone et d'hydrogène et éventuellement des hétéroatomes, de préférence l'oxygène et l'azote, de préférence un groupe (poly)oxyalkylene.
- ■ x est un nombre entier ou décimal compris entre 1 et 2, bornes inclues ou exclues.
- ■ M, identique ou différent, est un atome d'hydrogène ou un contre-ion cationique.

L'invention concerne également une composition inhibitrice des dépôts inorganiques comprenant un copolymère tel que décrit précédemment.

De préférence, dans le composition inhibitrice selon l'invention, la quantité de copolymère, exprimée à sec, est comprise entre 1 et 70% en masse.

L'invention concerne enfin un procédé d'inhibition des dépôts inorganiques dans un réservoir pétrolier comprenant la mise en contact d'une quantité efficace de la composition inhibitrice selon l'invention avec une formation pétrolière.

De préférence, le réservoir pétrolier est un réservoir HP/HT.

De préférence, les dépôts inorganiques sont des dépôts de calcium, de baryum et de fer.

Le procédé d'inhibition peut comprendre la mise en contact de la composition inhibitrice avec la formation pétrolière selon la méthode de squeeze.

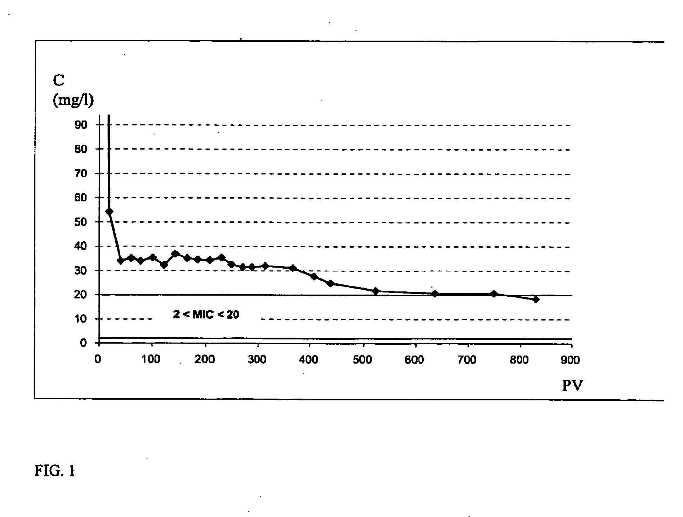

La figure 1 représente la durée de vie d'un traitement inhibiteur avec le composé MA/COPS1/PAM5000 dans du grès Clashach.

## Description détaillée de l'invention :

## Description du copolymère et de la composition inhibitrice selon l'invention

La masse moléculaire moyenne (exprimée en poids) du copolymère selon l'invention est, comprise de préférence entre 1000 et 50000 g/mol, de préférence comprise entre 2000 et 25000 g/mol, de préférence comprise entre 2000 et 15000 g/mol.

Celle-ci est déterminée par la technique de chromatographie d'exclusion stérique, la courbe d'étalonnage étant construite à partir d'un jeu d'étalons de poly(oxyde) d'éthylène.

Le copolymère selon l'invention comprend les trois unités monomères suivantes, décrites aux paragraphes A, B, C :

**A) au moins une unité monomère (a) dérivée d'au moins un acide aliphatique monocarboxylique ou polycarboxylique éthyléniquement insaturé,** d'un anhydride correspondant ou d'un sel hydrosoluble correspondant.

La chaîne aliphatique des acides aliphatiques carboxyliques dont dérive l'unité monomère (a), peut être linéaire ou ramifiée ; préférentiellement elle comprend de 2 à 7 atomes de carbone.

A titre d'exemple de monomères (a), on peut mentionner les acides carboxyliques $\alpha$-$\beta$ éthyléniquement insaturés ou les anhydrides correspondants, tels que les acides acrylique, méthacrylique, l'anhydride maléique, l'acide fumarique, l'acide itaconique, et leurs sels hydrosolubles, notamment leurs sels de métal alcalin (sodium par exemple) ou d'ammonium.

On peut mentionner également des monomères précurseurs de fonctions carboxylates, comme l'acrylate de tertiobutyle, qui engendrent, après polymérisation, des fonctions carboxyliques par hydrolyse.

Préférentiellement, le ou les monomères (a) sont l'acide acrylique, l'acide méthacrylique, l'anhydride maléique ou leurs sels hydrosolubles, de sodium notamment. En particulier, il peut s'agir de l'acide acrylique ou de l'acide maléique.

**B) au moins une unité monomère (b) dérivée d'un éther éthyléniquement insaturé sulfoné ou sulfaté de formule (I)**

$$CH_2 = C(R^1)\text{-}C(R^2)(R^3)\text{-}O\text{-}R'\text{-}Y^-X^+ \qquad (I)$$

formule dans laquelle les différents symboles ont la signification suivante :

- $R^1$, $R^2$ et $R^3$, semblables ou différents, représentent

  ○ un atome d'hydrogène ou
  ○ un radical alkyle

- R' représente un radical aliphatique divalent, linéaire ou ramifié, portant au moins un substituant OH
- $Y^-$ représente $SO_3^-$ ou $SO_4^-$
- X est un contre-ion.

D'une manière préférentielle, dans la formule (I) représentative de l'éther sulfoné ou sulfaté dont dérive l'unité monomère (b), les différents symboles ont la signification suivante :

- $R^1$ représente

  ○ un atome d'hydrogène ou
  ○ un radical alkyle contenant de 1 à 6 atomes de carbone, de préférence de 1 à 3 atomes de carbone, tout particulièrement 1 atome de carbone

- $R^2$ et $R^3$, semblables ou différents, représentent

  ○ un atome d'hydrogène ou

○ un radical alkyle contenant de 1 à 6 atomes de carbone, de préférence de 1 à 3 atomes de carbone

- R' représente un radical aliphatique divalent, linéaire ou ramifié, portant au moins un substituant OH et contenant de 1 à 6 atomes de carbone, tout particulièrement 3 atomes de carbone
- Y$^-$ représente SO$_3^-$ ou SO$_4^-$, tout préférentiellement SO$_3^-$
- X est un contre-ion hydrogène, métal alcalin ou ammonium.

A titre d'exemples de monomères (b), on peut mentionner notamment les acides 3-(meth)allyloxy-2-hydroxy-1-propanesulfoniques et leurs sels hydrosolubles, de sodium notamment, le sulfate d'ammonium et de 1-(allyloxy)-2-hydroxypropyle (ou « ammonium 1-(allyloxy)-2-hydroxypropyl sulphate »).

On peut citer en particulier le 1-allyloxy-2-hydroxypropyl sulfonate de sodium (AHPS), commercialisé par Rhodia sous la dénomination SIPOMER COPS-1.

**ou au moins une unité monomère (b') dérivée d'un monomère sulfoné éthyléniquement insaturé. autre que (b).**

D'une manière préférentielle, les <u>unités monomères (b')</u> dérivent d'un <u>monomère sulfoné éthyléniquement insaturé (b') autre que (b)</u> de formule (II)

$$CH_2 = C(R^1)\text{-}(Z)_n\text{-}R''\text{-}SO_3^-X^+ \qquad (II)$$

formule dans laquelle les différents symboles ont la signification suivante :

- R$^1$ représente

   ○ un atome d'hydrogène ou
   ○ un radical alkyle

- n est égal à 0 ou 1
- Z représente un groupe divalent de formule -C(O)-N(R$^4$)-R$^5$-, où

   ○ R$^4$ représente un atome d'hydrogène ou un radical alkyle
   ○ R$^5$ représente un radical divalent aliphatique, linéaire ou ramifié

- R'' représente un radical aliphatique divalent, linéaire ou ramifié,
- X est un contre-ion.

Plus préférentiellement, dans la formule (II) représentative du ou des monomères (b') les différents symboles ont la signification suivante :

- R$^1$ représente

   ○ un atome d'hydrogène ou
   o un radical alkyle contenant de 1 à 6 atomes de carbone, de préférence de 1 à 3 atomes de carbone, en particulier 1 atome de carbone
   • n est égal à 0 ou 1 ; de préférence n est égal à 1
   • Z représente un groupe divalent de formule -C(O)-N(R$^4$)-R$^5$-, où :

   ○ R$^4$ représente un atome d'hydrogène ou un radical alkyle contenant de 1 à 4 atome de carbone
   ○ R$^5$ représente un radical divalent aliphatique, linéaire ou ramifié contenant de 1 à 8 atomes de carbone, de préférence un radical - C(CH$_3$)$_2$-

   • R'' représente un radical aliphatique divalent, linéaire ou ramifié, contenant de préférence de 1 à 7 atomes de carbone, tout particulièrement 1 atome de carbone
   • X est un contre-ion hydrogène, métal alcalin ou ammonium.

A titre d'exemples de monomères (b'), on peut mentionner notamment :

- le vinyl sulfonate de sodium (SVS)
- l'acide 2-méthyl-2-propène-1-sulfonique (SMS)
- l'acide 2-acrylamide-2-méthyl-1-propanesulfonique (AMPS)

et leurs sels hydrosolubles, de sodium notamment ; tout particulièrement il s'agit de l'AMPS ou de son sel de sodium.

C) au moins une unité monomère (c) dérivée d'un monomère de formule générale
moyenne $[CH_2=CH-CH_2-R^6-O]_xP(=O)(OM)_{3-x}$, (III)

dans laquelle :

■ $R^6$ est un groupe organique divalent comportant des atomes de carbone et d'hydrogène et éventuellement des hétéroatomes, de préférence l'oxygène et l'azote, de préférence un groupe (poly)oxyalkylene.
■ x est un nombre entier ou décimal compris entre 1 et 2, bornes incluses ou exclues.
■ M, identique ou différent, est un atome d'hydrogène ou un contre-ion cationique.

Si M est un atome d'hydrogène, le monomère (c) est considéré comme étant sous forme acide. Si M est un contre-ion, le monomère (c) est considéré comme étant sous forme saline ou neutralisée. M peut être par exemple $NH_4^+$, $Na^+$ or $K^+$. La neutralisation peut avoir lieu après addition du monomère dans le milieu de polymérisation.
Le monomère (c) peut être un mélange d'un ester monophosphate (ou "monoester") avec x=1, et d'un ester diphosphate (ou "diester") avec x=2. Les montants respectifs de monoester et diester sont tels que x est égal ou supérieur à 1, par exemple égal ou supérieur à 1,01, et égal ou inférieur à 2, par exemple égal ou inférieur à 1,99. De manière préférée, le monomère (c) comprend un montant élevé de monoester, avec un rapport élevé du monoester sur le diester. Le nombre x peut être par exemple compris entre 1 et 1,5. De manière avantageuse, x est compris entre 1 et 1,2, de manière préférée entre 1,01 et 1,2. Il est mentionné que x=1,2 correspond à un rapport molaire monoester/diester de 80/20.
Le groupe $R^6$ est un groupe organique divalent, comprenant des atomes de carbone et d'hydrogène, et de manière optionnelle des hétéroatomes tels que des atomes d'oxygène et/ou d'azote. Des exemples préférés de groupes $R^6$ incluent des groupes alkylène divalents ayant de 2 à 20 atomes de carbone et des groupes (poly)oxyalkylène.
De préférence, le groupe $R^6$ est un groupe (poly)oxyalkylène de formule $-[O-A-]_n-$, dans lequel :

-A, identique ou différent, est un groupe de formule $-CH_2-CH_2-$ or $-CH_2-CH(CH_3)-$,
ou
$-CH(CH_3)-CH_2-$, et
- n un nombre moyen au moins égal à 1.

Les groupes -O-A- dans lesquels A est $-CH_2-CH_2-$ correspondent aux groupes éthoxy qui peuvent être obtenus à partir de l'oxyde d'éthylène. Les groupes -O-A- dans lesquels A est soit $-CH_2-CH(CH_3)-$ soit $-CH(CH_3)-CH_2-$ correspondent aux groupes propoxy qui peuvent être obtenus à partir d'oxyde de propylène. Les groupes (poly)oxyalkylene de formule $-[O-A-]_n-$ peuvent comprendre à la fois des groupes éthoxy et propoxy, arrangés de manière aléatoire ou par blocs.
De manière préférée, $R^6$ est un groupe polyoxyethylene de formule $-[O-CH_2-CH_2]_n-$, dans lequel n est un nombre moyen compris entre 2 et 10, de manière préférée entre 2.5 et 7.
De préférence, le monomère dont dérive l'unité monomère (c) est le polyoxyethylene alkyl ether phosphate, commercialisé par RHODIA sous la dénomination PAM 5000.
Selon un mode préféré de réalisation de l'invention, le copolymère est un terpolymère de l'acide acrylique, du 1-allyloxy-2-hydroxypropyl sulfonate de sodium (AHPS), commercialisé par Rhodia sous la dénomination SIPOMER COPS-1 et du PAM 5000. Selon un deuxième mode préféré de réalisation de l'invention, le copolymère est un terpolymère de l'acide maléique, de l'acide 2-acrylamide-2-méthyl-1-propanesulfonique (AMPS) ou de son sel de sodium, et du PAM 5000.
Selon un troisième, mode préféré de réalisation de l'invention, le copolymère est un terpolymère de l'acide maléique, du 1-allyloxy-2-hydroxypropyl sulfonate de sodium (AHPS), commercialisé par Rhodia sous la dénomination SIPOMER COPS-1, et du PAM 5000.
De préférence, dans le copolymère selon l'invention, les unités monomères (a) représentent entre 20% et 80% (en % molaire des monomères polymérisés), les unités monomères (b) ou (b') représentent entre 10% et 70 % (en % molaire des monomères polymérisés) et les unités monomères (c) représentent entre 10% et 70 % (en % molaire des monomères polymérisés).
Plus préférentiellement, les unités monomères (a) représentent entre 40% et 80% (en % molaire des monomères polymérisés), les unités monomères (b) ou (b') représentent entre 10% et 50% (en % molaire des monomères polymérisés) et les unités monomères (c) représentent entre 10% et 50% (en % molaire des monomères polymérisés).
La masse moléculaire moyenne (exprimée en poids) du copolymère selon l'invention est, comprise de préférence entre 1000 et 50000 g/mol, de préférence comprise entre 2000 et 25000 g/mol, ou de façon encore plus préférée, comprise entre 2000 et 15000 g/mol.

**Procédé de Préparation**

Préparation des monomères A, B, C

Les monomères A, B et C peuvent par exemple être préparés en suivant les méthodes de préparation décrites dans le brevet PCT WO 2008/135403 publié le 13 novembre 2008.

Mode de synthèse général

Les copolymères selon l'invention peuvent être obtenus selon les techniques connues de préparation des copolymères, notamment par polymérisation par voie radicalaire des monomères de départ éthyléniquement insaturés. Un procédé de préparation possible est décrit ci-dessous.

La polymérisation peut être initiée par addition d'un amorceur de polymérisation. Les amorceurs utilisés sont les initiateurs de radicaux libres habituellement utilisés dans la technique. Les initiateurs préférés sont solubles dans l'eau.

Les monomères de faible réactivité, par exemple l'acide maléique ou le le 1-allyloxy-2-hydroxypropyl sulfonate de sodium, sont introduits en pied de cuve avec l'eau dans un réacteur adapté. Le pied de cuve est chauffé sous agitation jusqu'à une température définie. On ajoute alors de façon discontinue ou continue à débit contrôlé, pendant une période définie, un initiateur, par exemple le persulfate de sodium, et dans certains cas, si nécessaire, un agent de transfert, par exemple l'acide mercapto-acétique.

Lorsque les monomères ont une forte réactivité, par exemple l'acide acrylique ou l' acide 2-acrylamide-2-méthyl-1 propane sulfonique, ils sont introduits de façon similaire à l'introduction d'initiateur et d'agent de transfert, c'est-à-dire une fois le pied de cuve chauffé. L'ajout est fait pendant une période définie, de façon discontinue ou continue à débit contrôlé.

Une fois la réaction terminée, le chauffage est arrêté, et on laisse le mélange réactionnel refroidir avant de le décharger.

Les copolymères sont obtenus sous forme de solution et celle-ci peut être soumise à une évaporation partielle ou totale, généralement sous pression réduite.

Les copolymères soumis à une évaporation partielle ou totale seront redilués pour leur utilisation.

Les copolymères en solution peuvent être utilisés tels quels en tant qu'inhibiteurs au sens de l'invention, ou purifiés selon des méthodes traditionnelles.

Les copolymères conformes à l'invention, dans lesquels tout ou partie des hydrogènes acides sont remplacés par des cations dérivés d'un sel approprié formant une base peuvent être également préparés en mélangeant une solution aqueuse, hydroalcoolique ou alcoolique du copolymère acide avec une solution aqueuse, hydroalcoolique ou alcoolique contenant une quantité de la base requise appropriée au degré de substitution désiré.

La présente invention vise donc également un procédé de préparation d'un copolymère selon l'invention comprenant

    A) au moins une unité monomère a)
    B) au moins une unité monomère b) et
    C) au moins une unité monomère c),

telles que décrites précédemment,
par polymérisation par voie radicalaire en présence d'un amorceur de polymérisation qui est un initiateur de radicaux libres :

    a) d'au moins un acide aliphatique monocarboxylique ou polycarboxylique éthyléniquement insaturé, d'un anhydride correspondant ou d'un sel hydrosoluble correspondant.
    b) d'au moins un éther éthyléniquement insaturé sulfoné ou sulfaté de formule (I)

$$CH_2 = C(R^1)\text{-}C(R^2)(R^3)\text{-}O\text{-}R'\text{-}Y\text{-}X^+ \qquad (I)$$

formule dans laquelle les différents symboles ont la signification suivante :

    •   $R^1$, $R^2$ et $R^3$ , semblables ou différents, représentent

        ○  un atome d'hydrogène ou

○ un radical alkyle

- R' représente un radical aliphatique divalent, linéaire ou ramifié, portant au moins un substituant OH
- Y$^-$ représente SO$_3^-$ ou SO$_4^-$
- X est un contre-ion,

ou d'au moins un monomère sulfoné éthyléniquement insaturé (b'), autre que (b),_de formule (II)

$$CH_2 = C(R^1)-(Z)_n-R''-SO_3^-X^+ \qquad (II)$$

formule dans laquelle les différents symboles ont la signification suivante :

- R$^1$ représente

○ un atome d'hydrogène ou
○ un radical alkyle

- n est égal à 0 ou 1
- Z représente un groupe divalent de formule - C(O) - N(R$^4$) - R$^5$ -, où

○ R$^4$ représente un atome d'hydrogène ou un radical alkyle
○ R$^5$ représente un radical divalent aliphatique, linéaire ou ramifié

- R'' représente un radical aliphatique divalent, linéaire ou ramifié,

X est un contre-ion, et
C) d'au moins un monomère (c) de formule générale moyenne [CH$_2$=CH-CH$_2$-R$^6$-O-]xP(=O)(OM)$_{3-x}$, (III)
dans laquelle :

■ R$^6$ est un groupe organique divalent comportant des atomes de carbone et d'hydrogène et éventuellement des hétéroatomes , de préférence l'oxygène et l'azote), de préférence un groupe (poly)oxyalkylene.
■ x est un nombre entier ou décimal compris entre 1 et 2, bornes incluses ou exclues.
■ M, identique ou différent, est un atome d'hydrogène ou un contre-ion cationique.

**Méthode d'inhibition des dépôts inorganiques**

Lors des opérations de transport et de stockage, les inhibiteurs conformes à l'invention se présentent soit en poudre, soit en solution dont la concentration peut être de l'ordre de 10 à 50 % en poids.
Lors d' l'utilisation dans les puits pétroliers, les solutions destinées à l'injection en continu dans les puits ont une concentration de l'ordre de 1 à 100 ppm, alors que les solutions utilisées en « squeeze » sont injectées généralement à une concentration de l'ordre de 10% en poids, toutes ces valeurs de concentration n'étant données qu'à titre purement indicatif.
A titre non limitatif, la composition selon l'invention s'applique avantageusement aux dépôts inorganiques dans le domaine pétrolier, particulièrement dans les réservoirs géologiques pétroliers, notamment en conditions HP/HT.
La composition inhibitrice selon l'invention est de préférence appliquée à une roche réservoir au moyen d'un procédé de type "squeeze", c'est à dire d'un procédé permettant l'injection d'une quantité importante de produit dans le réservoir à partir d'un puits, afin d'obtenir un relargage progressif de l'inhibiteur aux abords du puits, dans la roche réservoir. Le squeeze est un procédé en trois étapes dans lequel les fluides sont injectés directement dans le puits, en inversant le flux de liquide par rapport au sens d'écoulement en production. Premièrement, on injecte une solution diluée d'inhibiteur (généralement comprise entre 0,1 et 1 %) en association avec un tensio-actif pour nettoyer et refroidir les abords du puits. Cette étape est suivie par la mise en place par injection d'une solution concentrée d'inhibiteur ("pill") à une teneur généralement comprise entre 1 et 70% suivie à nouveau d'une autre injection d'une solution faiblement concentrée d'inhibiteur ("pill") pour pousser la solution concentrée loin des abords du puits, à une distance calculée par modélisation au laboratoire pour donner la meilleure durée de traitement au squeeze. Les solutions sont laissées en contact avec le réservoir pour une durée comprise entre 6 et 24 h, idéalement pour permettre l'atteinte de l'équilibre d'adsorption. Ensuite, le puits est remis en production.
Les propriétés d'adsorption sur la roche du copolymère selon l'invention lui permettent de rester dans les abords proches du puits sans être entraîné avec l'émulsion eau/pétrole à la remise en production, et de se retrouver à des concentrations en phase aqueuse au-dessus de la MIC pour une période prolongée.

D'autres mises en oeuvre de la composition inhibitrice comprenant le copolymère selon l'invention peuvent être faites pour le traitement des dépôts inorganiques en fond de puits : injection en cours de production par allégement au gaz ("gas lift" ), injection annulaire en fond de puits, encapsulation ou techniques mettant en oeuvre des matrices solides, injection sous-marine en tête de puits.

**Exemples :**

**Exemples 1-5 : Synthèse de copolymères**

Signification des abréviations ou sigles utilisés dans les exemples de synthèse :

| | |
|---|---|
| AA | Acide Acrylique |
| MA | Acide Maléique |
| SVS | Vinyl Sulfonate de Sodium |
| COPS1 | 1-allyloxy-2-hydroxypropyl sulfonate de sodium |
| AMPS | 2-acrylamido-2-methylpropane Sulfonate de Sodium |
| PAM5000 | Polyoxyethylene Alkyl ether phosphate |

Après polymérisation, la solution finale est analysée par chromatographie d'exclusion stérique en utilisant des de poly(oxyde) d'éthylène. Les masses molaires moyennes sont exprimées en poids.

**Exemple 1** <u>Synthèse d'un copolymère à base de MA/COPS1/PAM5000</u>

Dans un ballon tricol de 500 ml muni d'un agitateur mécanique sont introduits à température ambiante :

- 25,57 g d'une solution aqueuse d'acide maléique à 40% massique,
- 18,65 g d'une solution aqueuse de Sipomer COPS1 (monomère Rhodia) à 40% massique, 18,63 g d'une solution aqueuse de Sipomer PAM5000 (monomère Rhodia) à 30% massique et de 106,36 g d'eau épurée.

Le milieu réactionnel est porté à 80°C sous agitation. On ajoute alors simultanément en une fois 12,35 g d'une solution à 10% massique de persulfate de sodium et 2,03 g d'une solution aqueuse d'acide mercaptoacétique à 3% massique. Après 60 minutes de réaction, on ajoute en une fois 2,03 g d'une solution aqueuse d'acide mercaptoacétique à 3% massique. Après 120 minutes, on ajoute encore simultanément et en une fois 12,35 g d'une solution à 10% massique de persulfate de sodium et 2,03 g d'une solution aqueuse d'acide mercaptoacétique à 3% massique. L'ensemble est alors maintenu pendant 240 minutes supplémentaires à 80°C sous agitation. Après 360 minutes, on arrête alors le chauffage et on laisse le milieu réactionnel refroidir jusqu'à température ambiante puis on décharge la solution.

La masse moléculaire moyenne en poids mesurée sur la solution est de 4306 g/mol. L'extrait sec théorique est de 13% poids.

**Exemple 2** <u>Synthèse d'un copolymère à base de MA/AMPS/PAM5000</u>

Dans un ballon tricol de 500 ml muni d'un agitateur mécanique sont introduits à température ambiante

- 25,57 g d'une solution aqueuse d'acide maléique à 40% massique,
- 18,63 g d'une solution aqueuse de Sipomer PAM5000 (monomère Rhodia) à 30% massique et de 106,36 g d'eau épurée.

Le milieu réactionnel est porté à 80°C sous agitation. On ajoute alors simultanément en une fois 12,35 g d'une solution à 10% massique de persulfate de sodium et 2,03 g d'une solution aqueuse d'acide mercaptoacétique à 3% massique. Après 10 minutes, on ajoute en une fois 2,83 g d'une solution aqueuse d'AMPS à 50% massique en une fois. Après 40 minutes, on ajoute de nouveau en une fois 2,83 g d'une solution aqueuse d'AMPS à 50% massique. Après 60 mn, on ajoute en une fois 2,03 g d'une solution aqueuse d'acide mercaptoacétique à 3% massique. Après 80 minutes, on ajoute de nouveau en une fois 2,83 g d'une solution aqueuse d'AMPS à 50% massique. Après 120 minutes, on ajoute simultanément et en une fois 12,35 g d'une solution à 10% massique de persulfate de sodium et 2,03 g d'une solution aqueuse d'acide mercaptoacétique à 3% massique. Après 140 minutes, on ajoute de nouveau en une fois 2,83 g d'une solution aqueuse d'AMPS à 50% massique. Après 160 mn, un dernier ajout de 2,83 g de solution d'AMPS est effectué puis l'ensemble est maintenu pendant 200 minutes supplémentaires à 80°C sous agitation. Après 360 minutes, on arrête alors le chauffage et on laisse le milieu réactionnel refroidir jusqu'à température ambiante, puis on décharge la solution.

La masse moléculaire moyenne en poids mesurée sur la solution est de 5470 g/mol. L'extrait sec théorique est de 13% poids.

## Exemple 3 Synthèse d'un copolymère à base de AA/COPS1/PAM5000

Dans un ballon tricol de 500ml muni d'un agitateur mécanique sont introduits à température ambiante :

- 61,32 g d'une solution aqueuse de Sipomer COPS1 (monomère B) Rhodia à 40% massique,
- 21,81 g d'une solution aqueuse de Sipomer PAM5000 (monomère C) Rhodia à 92% massique et de 45,68 g d'eau épurée.

Le milieu réactionnel est porté à 80°C sous agitation. On ajoute alors simultanément en une fois 25,75 g d'une solution à 10% massique de persulfate de sodium et 3,86 g d'une solution aqueuse d'acide mercaptoacétique à 3% massique. Après 10 minutes, on ajoute en une fois 1,62 g d'acide acrylique en une fois. Après 40 minutes, on ajoute de nouveau en une fois 1,62 g d'acide acrylique. Après 60 minutes, on ajoute en une fois 3,86 g d'une solution aqueuse d'acide mercaptoacétique à 3% massique. Après 80 minutes, on ajoute de nouveau en une fois 1,62 g d'acide acrylique. Après 120 minutes, on ajoute simultanément et en une fois 25,75 g d'une solution à 10% massique de persulfate de sodium et 3,86 g d'une solution aqueuse d'acide mercaptoacétique à 3% massique. Après 140 minutes, on ajoute de nouveau en une fois 1,62 g d'acide acrylique. Après 160 mn, un dernier ajout de 1,62g d'acide acrylique est effectué puis l'ensemble est maintenu pendant 200 minutes supplémentaires à 80°C sous agitation. Après 360 minutes, on arrête alors le chauffage et on laisse le milieu réactionnel refroidir jusqu'à température ambiante puis on décharge la solution.

La masse moléculaire moyenne en poids mesurée sur la solution est de 12982 g/mol. L'extrait sec théorique est de 29% poids.

## Exemple 4 Synthèse d'un copolymère à base de MA/SVS/PAM5000

Dans un ballon tricol de 250ml et muni d'un réfrigérant sont ajoutés:

- 41,1 g d'acide maléique (100%),
- 70,82 g d'une solution aqueuse de vinyl sulfonate de sodium (SVS) à 25% massique,
- 23,75 g d'une solution aqueuse de Sipomer PAM5000 (monomère Rhodia C) à 92 % massique.

Le mélange réactionnel est porté à 80 °C sous agitation. On ajoute alors simultanément en une fois 3,96 g d'une solution à 25% massique de persulfate de sodium. Immédiatement après, on ajoute en continu pendant 5 heures 15,85 g d'une solution. à 25% massique de persulfate de sodium. Une fois l'addition terminée, on maintient l'ensemble pendant 2 heures à 80°C sous agitation. Après 420 minutes, on arrête le chauffage et on laisse le mélange réactionnel refroidir jusqu'à température ambiante, puis on décharge la solution.

La masse moléculaire moyenne en poids mesurée sur la solution est 7550 g/mol. L'extrait sec théorique est de 55 % poids.

## Exemple 5 Synthèse d'un copolymère à base de AA/SVS/PAM5000

Dans un ballon tricol de 250ml muni d'un réfrigérant sont ajoutés:

- 52 g d'une solution aqueuse de vinysulfonate sodium (SVS) à 25% massique,
- 17,43 g d'une solution aqueuse de Sipomer PAM5000 (monomère Rhodia C) à 92 % massique.

Le mélange réactionnel est chauffé à 80 ° C sous agitation. On ajoute en une fois 5,89 g d'une solution à 25% massique de persulfate de sodium. Immédiatement après, on ajoute en continu pendant 3 heures 18,74 g d'acide acrylique. Simultanément, on ajoute en continu et pendant 200 minutes 23,56g d'une solution à 25% massique de persulfate de sodium. Une fois l'addition de la solution de persulfate de sodium terminée, le mélange réactionnel est maintenu à 80° C sous agitation pendant 100 minutes. Après 350 minutes, on arrête le chauffage et on laisse le mélange réactionnel refroidir jusqu'à température ambiante, puis on décharge la solution.

La masse moléculaire moyenne en poids mesurée sur la solution sont 43125 g/mol. L'extrait sec théorique est de 45 % poids.

**Exemples - 6-10 : exemples d'évaluation en conditions statiques et dynamiques de l'efficacité d'inhibition de CaCO3 et BaSO4.**

Ces exemples intègrent une comparaison de performance avec un acide amino phosphonique (DETPMP), agent anti-tartre classique. Les inhibiteurs à haute teneur en phosphore, comme le DETPMP, sont généralement des anti-tartres efficaces mais sont souvent délaissés en raison de leur profils environnementaux peu satisfaisants et de leur faible stabilité thermique à la différence des produits selon l'invention comme cela apparaît à la lecture des tableaux comparatifs ci-après.

Deux types d'évaluations sont menés :

Une évaluation en condition statique, appelée « Jar test » ou « Bottle Test », qui consiste à mesurer le taux de cation précipitant (calcium ou baryum) soluble après mélange dans un flacon de deux eaux incompatibles, puis évolution du mélange sans agitation pendant un temps donné, et mesure par une méthode spectroscopique (ICP-AES) des cations solubles. Les expérimentations comprennent un essai témoin sans inhibiteur et des tests en présence d'inhibiteurs.

Une évaluation en condition dynamique, appelée «Tube Blocking Test », qui consiste à mesurer à 150°C, sous 15 bars, le temps de colmatage d'un capillaire lors de l'injection d'un mélange de deux eaux incompatibles: pour une étude sur les dépôts carbonatés (calcite...), une eau contient des ions bicarbonate e' l'autre des ions calcium; pour une étude sur les dépôts sulfatés, une eau contient des ions sulfate et' l'autre des ions baryum. Chacune des eaux contient une quantité d'inhibiteur diminuant progressivement de 20 ppm à une concentration basse limite pour laquelle le temps de bouchage est inférieur ou égal à 1 heure. Cette concentration limite est appelée Minimum de Concentration d'Inhibition (MIC).

Une mesure de pression différentielle entre l'entrée et la sortie du capillaire permet de suivre l'évolution du colmatage du capillaire, elle est mesurée dans une gamme 0-5 bars. Le capillaire en acier inoxydable est d'une longueur de 1 mètre avec un diamètre intérieur de 0,5 mm.

**Exemple 6 : évaluation en condition statique des Performances d'inhibition du CaCO3**

Cette évaluation est effectuée à 95°C et pH neutre après mélange de deux saumures dont l'une contient du calcium et l'autre contient du bicarbonate de sodium. L'inhibiteur est placé dans l'eau contenant le bicarbonate. La concentration en inhibiteur est de 10 ppm (en matière active) par rapport au mélange final.

Les compositions des saumures sont les suivantes :

| Concentration (g/l) | Eau des Cations | Eau des Anions |
|---|---|---|
| NaCl | 33.00 | 33.00 |
| MgCl2, 6H2O | 3.68 | 0 |
| CaCl2, 2H2O | 12.15 | 0 |
| NaHCO3 | 0 | 7.36 |

50 ml de chacune de ces eaux sont conditionnés dans des flacons de polyéthylène. Après avoir équilibré la température des saumures à 95°C dans une étuve, on verse le contenu du flacon « des anions» dans le flacon contenant le calcium. On agite manuellement puis le mélange est remis à l'étuve à 95°C pendant 2h.

Deux essais de contrôle sont réalisés :

blanc min : il s'agit d'un essai sans inhibiteur, la teneur en ion calcium sera minimum (précipitation maximum du CaCO3).

blanc Max : il s'agit d'un essai sans bicarbonate et sans inhibiteur, la saumure anionique est remplacée par de l'eau épurée, la teneur en ion calcium sera maximum car il n'y a pas de précipitation.

Après les 2 heures de test, les flacons sont sortis de l'étuve et un prélèvement de 1 ml est effectué, puis dilué dans 20 ml d'eau épurée. On effectue un dosage du calcium sur ces prélèvements et on en déduit l'efficacité d'inhibition exprimée selon la formule ci-dessous.

$$\% \text{ efficacité} = \frac{[Ca^{2+}] - [Ca^{2+}]_{min}}{[Ca^{2+}]_{max} - [Ca^{2+}]_{min}} * 100$$

avec $[Ca^{2+}]_{max}$ = concentration en $Ca^{2+}$ dans le blanc Max

$[Ca^{2+}]_{min}$ = concentration en $Ca^{2+}$ dans le blanc Min

Le tableau ci-dessous regroupe les performances obten es :

| inhibiteur | % efficacité d'inhibition de CaCO3 (10 ppm) |
|---|---|
| exemple 1 MA/COPS1/PAM5000 | 45 |
| exemple 2 MA/AMPS.PAM5000 | 42 |
| exemple 3 AA/COPS1/PAM5000 | 26 |
| exemple 4 MA/SVS/PAM5000 | 41 |
| exemple 5 AA/SVS/PAM5000 | 25 |
| DETPMP | 39 |

**Exemple 7 : <u>évaluation en condition statique des performances d'inhibition du BaSO4</u>**

Cette évaluation est effectuée à 95°C et pH 5,5 après mélange de deux saumures dont l'une a la composition de l'eau de formation du champ FORTIES en Mer du Nord (contient du baryum) et l'autre a la composition de l'eau de Mer (contient du sulfate). L'inhibiteur est placé dans l'eau de mer. La concentration en inhibiteur est de 15 ppm (en matière active) par rapport au mélange final.

Le pH de la solution d'eau de mer contenant de l'inhibiteur est amené vers 5,5 avec une solution tampon acétate de sodium/acide acétique.

Les compositions des saumures (eau de FORTIES et eau de Mer) sont les suivantes :

Eau de FORTIES

| Ion | mg/L |
|---|---|
| $Na^+$ | 31275 |
| $Ca^{2+}$ | 2000 |
| $Mg^{2+}$ | 739 |
| $K^+$ | 654 |
| $Ba^{2+}$ | 269 |
| $Sr^{2+}$ | 87,6 |

| sel | Sel (g/L) |
|---|---|
| NaCl | 79,50 |
| $CaCl_2, 2H_2O$ | 7,34 |
| $MgCl_2, 6H_2O$ | 6,18 |
| KCl | 1,25 |
| $BaCl_2, 2H_2O$ | 0,48 |
| $SrCl_2, 6H_2O$ | 2,35 |

Eau de Mer

| Ion | mg/L |
|---|---|
| Na$^+$ | 10890 |
| Ca$^{2+}$ | 428 |
| Mg$^{2+}$ | 1368 |
| K$^+$ | 460 |
| SO$_4$$^{2-}$ | 2690 |

| sel | Sel (g/L) |
|---|---|
| NaCl | 24,40 |
| CaCl$_2$,2H$_2$O | 1,57 |
| MgCl$_2$,6H$_2$O | 11,44 |
| KCl | 0.88 |
| Na$_2$SO4 | 3,97 |

100 ml de chacune de ces eaux sont conditionnés dans des flacons de polyéthylène. Après avoir équilibré la température des saumures à 95°C dans une étuve, on verse le contenu du flacon « eau des FORTIES » dans le flacon contenant le baryum. On agite manuellement puis le mélange est remis à l'étuve à 95°C pendant 2h.
Pour chaque série d'essai, deux essais de contrôle sont réalisés :

blanc min : il s'agit d'un essai sans inhibiteur, la teneur en ion Baryum sera minimum (précipitation maximum du BaSO4).
blanc Max : il s'agit d'un essai sans sulfate et sans inhibiteur, l'eau de mer est remplacée par de l'eau épurée, la teneur en ion Baryum sera maximum, car il n'y a pas de précipitation.

Après les 2 heures de test, les flacons sont sortis de l'étuve et un prélèvement de 5 ml est effectué, puis dilué dans 5 ml d'une solution de « trempe » dont la composition est : 5000 ppm de KCL / 1000 ppm de PVS (poly vinyl sulfonate de sodium) ajusté à pH 8 - 8.5 (avec NaOH 0.01N). On effectue un dosage du Baryum (ICP-AES) sur ces prélèvements et on en déduit l'efficacité d'inhibition exprimée selon la formule ci-dessous.

$$\% \text{ efficacité} = \frac{[Ba^{2+}] - [Ba^{2+}]_{min}}{[Ba^{2+}]_{max} - [Ba^{2+}]_{min}} * 100$$

avec $[Ba^{2+}]_{max}$ = concentration en Ba$^{2+}$ dans le blanc Max
$[Ba^{2+}]_{min}$ = concentration en Ba$^{2+}$ dans le blanc Min

Le tableau ci-dessous regroupe les performances obtenues

| inhibiteur | % efficacité d'inhibition de BaSO4 (15 ppm) |
|---|---|
| exemple 1 MA/COPS1/PAM5000 | 67 |
| exemple 2 MA/AMPS.PAM5000 | 85 |
| exemple 3 AA/COPSI/PAM5000 | 20 |
| exemple 4 MA/SVS/PAMS000 | 71 |
| exemple 5 AA/SVS/PAMS000 | 47 |

(suite)

| inhibiteur | % efficacité d'inhibition de BaSO4 (15 ppm) |
|---|---|
| DETPMP | 95 |

**Exemple 8 : <u>évaluation en condition dynamique des performances d'inhibition du CaCO3</u>**

Cette évaluation est effectuée à 150°C, sous pression de 15 bars, après mélange de deux saumures, l'une contenant des anions dont le bicarbonate, l'autre les cations dont le calcium. La composition du mélange des deux saumures est représentatif des conditions de précipitation du carbonate de calcium dans le champ de KRISTIN, en Mer du Nord. L'inhibiteur est placé dans l'eau des anions. Le pH est de 7-7,5.
On commence avec une concentration en inhibiteur de 20 ppm (matière active) par rapport au mélange, puis on décroît progressivement cette teneur jusqu'à boucher le capillaire.
Le temps de bouchage pris arbitrairement pour déterminer la MIC est de 1 heure.
Le débit en saumure est de 2x25ml/h.

| Composition en sel mg/l | Eau des cations | Eau des anions |
|---|---|---|
| NaCl | 86000 | 86000 |
| KCl | 8013 | 0 |
| $MgCl_2, 6H_2O$ | 1857 | 0 |
| $CaCl2, 2H_2O$ | 18707 | 0 |
| $SrCl_2, 6H_2O$ | 3249 | 0 |
| $BaCl_2, 2H_2O$ | 5755 | 0 |
| $NaHCO_3$ | 0 | 844 |

Le tableau ci-dessous regroupe les MIC obtenues :

| inhibiteur | MIC (CaCO3) en ppm |
|---|---|
| exemple 1 MA/COPS1/PAM5000 | 2 < MIC < 5 |
| exemple 2 MA/AMPS.PAM5000 | 5 < MIC < 10 |
| exemple 3 AA/COPS1/PAM5000 | 10 < MIC < 20 |
| DETPMP | MIC < 2 |

**Exemple 9 : <u>évaluation en condition dynamique des Performances d'inhibition du BaSO4</u>**

Cette évaluation est effectuée à 150°C, sous pression de 15 bars et à pH 6 après mélange de deux saumures, l'une contenant des anions dont le sulfate, l'autre les cations dont le baryum. La composition du mélange des deux saumures correspond à un mélange 50/50 d'une eau du champ de FORTIES en Mer du Nord et d'une eau de Mer. L'inhibiteur est placé dans l'eau des anions. On ajuste le pH de l'eau des anions à 6 par ajout d'un tampon acide acétique-acétate de sodium.
On commence avec une concentration en inhibiteur de 20 ppm (matière active) par rapport au mélange, puis on décroît progressivement cette teneur jusqu'à boucher le capillaire.
Le temps de bouchage pris arbitrairement pour la mesure de MIC est de 1 heure. Le débit en saumure est de 2x5ml/h.

| Composition en sel mg/l | Eau des cations | Eau des anions |
|---|---|---|
| NaCl | 0 | 98 708 |
| $BaCl_2,2H_2O$ | 445 | 0 |
| $SrCl_2,6H_2O$ | 2 033 | 0 |
| $CaCl_2,2H_2O$ | 12 978 | 0 |
| $MgCl_2,6H_2O$ | 15 461 | 0 |

**EP 2 387 591 B1**

(suite)

| Composition en sel mg/l | Eau des cations | Eau des anions |
|---|---|---|
| KCl | 440 | 440 |
| $Na_2SO_4$ | 0 | 4 379 |

Le tableau ci-dessous regroupe les MIC obtenues.

| inhibiteur | MIC (BaSO4) en ppm |
|---|---|
| exemple 1 MA/COPS1/PAM5000 | 2< MIC < 5 |
| exemple 2 MA/AMPS.PAM5000 | MIC < 2 |
| exemple 3 AA/COPS1/PAM5000 | 2 < MIC < 5 |
| DETPMP | 2< MIC< 5 |

**Exemple 10 - Temps de vie d'un traitement inhibiteur avec le <u>composé synthétisé dans l'exemple 1 MA/ COPS1/PAM5000.</u>**

La roche utilisée dans cette expérience est une carotte de grès Clashach. L'inhibiteur (<u>MA/COPS1/PAM5000</u>) est dissout dans l'eau de mer à la concentration de 10 g/l. La température d'essai est de 120° C. Le grès Clashach est saturé d'eau de mer puis 3 volume poreux (PV) de solution d'inhibiteur sont injectés. La solution d'inhibiteur est laissée en contact avec la carotte toute la nuit. Le lendemain, l'eau de mer est injectée pour éluer l'inhibiteur. La concentration en inhibiteur (C en mgL) est analysé par une mesure du carbone organique et la durée de vie du traitement inhibiteur est mesurée. Comme le montre la figure 1, la concentration en inhibiteur lors du relargage est élevée par rapport au grand volume d'eau est injecté. La durée de vie estimée à la MIC est de 800 PV.
Ces résultats montre que le composé MA/COPS1/PAM 5000 est bien adapté à un procédé de "squeeze" pour des puits à haute température.

**<u>Exemples 11-12</u> : exemples d'évaluation en conditions statiques des propriétés d'adsorption.**

Les additifs selon l'invention sont évalués quant à leur capacité à s'adsorber sur la roche et sur l'argile.
Pour ce faire, une solution de concentration connue d'inhibiteur dans de l'eau de mer synthétique est mise en contact sous agitation pendant 4 heures à la température de 85°C avec une quantité connue de solide. La suspension de solide est ensuite centrifugée et filtrée, puis analysée en terme de carbone organique dissous. La quantité adsorbée est mesurée en utilisant le protocole suivant.

- Pour chaque solution d'additif dilué dan' l'eau de mer à la concentration visée, la concentration en carbone organique ($COT_{SM\_}$ en ppm) et un coefficient de réponse $K$ ( Concentration d'additif dans la solution / Concentration en carbone organique dans la solution) sont déterminés.
- La concentration ($COT_{Filtrat}$ en ppm) en carbone organique dans la solution surnageante après adsorption est déterminée.

La quantité adsorbée ($QA$) est alors calculée en utilisant la formule suivante :

$$QA = \frac{(COT_{SM} - COT_{Filtrat}) \times K \times V_{SM}}{1000 \times M_{Solide} \times S_{BET}}$$

avec $_{SM}$ : Volume de solution en $cm^3$
$M_{sol}$ de : Masse de solide en grammes
$S_{ET}$ : Surface spécifique du solide

**18**

## Exemple 11 : Adsorption sur le grès

Le grès utilisé est du grès de Clashach broyé. Sa surface spécifique mesurée suivant la méthode BET à l'azote est d'environ $1m^2/g$. Pour chaque produit, des solutions à 1mg/l de matière active sont préparées dans l' l'eau de mer. Le pH de ces solutions est ajusté à 2, 4 et 6 en utilisant d' l'acide chlorhydrique ou de la soude.

Pour chaque essai, 10ml de solution et 10 g de grès sont utilisés, soir un rapport solide /liquide de 1.

Le tableau ci-dessous regroupe les adsorptions mesurées.

| inhibiteur | pH | Quantité Adsorbée (mg additif / $m^2$ grès) |
|---|---|---|
| exemple 1 MA/COPS1/PAM5000 | 2 | 0.54 |
| | 4 | 0.36 |
| | 6 | 0.25 |
| exemple 2 MA/AMPS.PAM5000 | 2 | 0.50 |
| | 4 | 0.40 |
| | 6 | 0.32 |
| exemple 3 AA/COPS1/PAM5000 | 2 | 0.77 |
| | 4 | 0.42 |
| | 6 | 0.38 |

## Exemple 12 : Adsorption sur l'argile

L'argile utilisée est de la kaolinite. Sa surface spécifique mesurée suivant la méthode BET à l'azote est de 12 $m^2/g$. Pour chaque produit, des solutions à 3,5 mg/l de matière active sont préparées dans l'eau de mer. Le pH de ces solutions est ajusté à 6 en utilisant de l'acide chlorhydrique ou de la soude.

Pour chaque essai, 13 ml de solution et 2,6 g de kaolinite sont utilisés soit un rapport solide / liquide de 0,2.

Le tableau ci-dessous regroupe les adsorptions mesurées.

| inhibiteur | Quantité Adsorbée (mg additif / $m^2$ d'argile) |
|---|---|
| exemple 1 MA/COPS1/PAM5000 | 0.31 |
| exemple 2 MA/AMPS.PAM5000 | 0.38 |
| exemple 3 AA/COPS1/PAM5000 | 0.56 |

## Revendications

**1.** Copolymère comprenant :

A) au moins une unité monomère a) dérivée d'au moins un acide aliphatique monocarboxylique ou polycarboxylique éthyléniquement insaturé, d'un anhydride correspondant ou d'un sel hydrosoluble correspondant; et

B) au moins une unité monomère b) dérivée d'un éther éthyléniquement insaturé sulfoné ou sulfaté de formule (I)

$$CH_2 = C(R^1)\text{-}C(R^2)(R^3)\text{-}O\text{-}R'\text{-}Y^-X^+ \qquad (I)$$

formule dans laquelle les différents symboles ont la signification suivante :

- $R^1$, $R^2$ et $R^3$ , semblables ou différents, représentent

  ○ un atome d'hydrogène ou
  ○ un radical alkyle

- R' représente un radical aliphatique divalent, linéaire ou ramifié, portant au moins un substituant OH
- $Y^-$ représente $SO_3^-$ ou $SO_4^-$
- X est un contre-ion.

ou au moins une unité monomère (b') dérivée d'un monomère sulfoné éthyléniquement insaturé, autre que (b), de formule (II)

$$CH_2 = C(R^1)\text{-}(Z)_n\text{-}R''\text{-}SO_3^-X^+ \qquad (II)$$

formule dans laquelle les différents symboles ont la signification suivante :

- $R^1$ représente

  ○ un atome d'hydrogène ou
  ○ un radical alkyle

- n est égal à 0 ou 1
- Z représente un groupe divalent de formule - C(O) - N(R$^4$) - R$^5$ -, où

  ○ $R^4$ représente un atome d'hydrogène ou un radical alkyle
  ○ $R^5$ représente un radical divalent aliphatique, linéaire ou ramifié

- R" représente un radical aliphatique divalent, linéaire ou ramifié,
- X est un contre-ion,

et

C) au moins une unité monomère (c) dérivée d'un monomère de formule générale moyenne [CH$_2$=CH-CH$_2$-R$^6$-O-]$_x$P(=O)(OM)$_{3-x}$, (III)
dans laquelle :

  ■ $R^6$ est un groupe organique divalent comportant des atomes de carbone et d'hydrogène et éventuellement des hétéroatomes, de préférence l'oxygène et l'azote, de préférence un groupe (poly)oxyalkylene.
  ■ x est un nombre entier ou décimal compris entre 1 et 2, bornes incluses ou exclues.
  ■ M, identique ou différent, est un atome d'hydrogène ou un contre-ion cationique.

2. Copolymère selon la revendication 1 dans lequel, dans la formule (I) représentative du monomère (b):

- $R^1$ représente

  ○ un atome d'hydrogène ou
  ○ un radical alkyle contenant de 1 à 6 atomes de carbone, de préférence de 1 à 3 atomes de carbone, tout particulièrement 1 atome de carbone

- $R^2$ et $R^3$, semblables ou différents, représentent

  ○ un atome d'hydrogène ou
  ○ un radical alkyle contenant de 1 à 6 atomes de carbone, de préférence de 1 à 3 atomes de carbone

- R' représente un radical aliphatique divalent, linéaire ou ramifié, portant au moins un substituant OH et contenant de 1 à 6 atomes de carbone, tout particulièrement 3 atomes de carbone
- $Y^-$ représente $SO_3^-$ ou $SO_4^-$ , tout préférentiellement $SO_3^-$
- X est un contre-ion hydrogène, métal alcalin ou ammonium.

3. Copolymère selon la revendication 2 dans lequel le monomère (b) est choisi parmi les acides 3-(meth)allyloxy-2-hydroxy-1-propanesulfoniques et leurs sels hydrosolubles, le sulfate d'ammonium et de 1-(allyloxy)-2-hydroxypropyle (ou «ammonium 1-(allyloxy)-2-hydroxypropyl sulphate »).

4. Copolymère selon la revendication 3 dans lequel le monomère (b) est le sel de sodium de l'acide 1-allyloxy-2-hydroxy-1-propanesulfonique (AHPS).

5. Copolymère selon la revendication 1 dans lequel, dans la formule (II) représentative du monomère ( b') :

   • $R^1$ représente

      ○ un atome d'hydrogène ou
      ○ un radical alkyle

   • n est égal à 0 ou 1
   • Z représente un groupe divalent de formule -C(O)-N($R^4$)-$R^5$-, où

      ○ $R^4$ représente un atome d'hydrogène ou un radical alkyle
      ○ $R^5$ représente un radical divalent aliphatique, linéaire ou ramifié

   • R" représente un radical aliphatique divalent, linéaire ou ramifié,
   • X est un contre-ion.

6. Copolymère selon la revendication 5 dans lequel, dans la formule (II) représentative du monomère b') :

   • $R^1$ représente

      ○ un atome d'hydrogène ou
      ○ un radical alkyle contenant de 1 à 6 atomes de carbone, de préférence de 1 à 3 atomes de carbone, en particulier 1 atome de carbone

   • n est égal à 0 ou 1 ; de préférence n est égal à 1
   • Z représente un groupe divalent de formule -C(O)-N($R^4$)-$R^5$-, où :

      ○ $R^4$ représente un atome d'hydrogène ou un radical alkyle contenant de 1 à 4 atomes de carbone
      ○ $R^5$ représente un radical divalent aliphatique, linéaire ou ramifié contenant de 1 à 8 atomes de carbone, de préférence un radical - C(CH$_3$)$_2$ -

   • R" représente un radical aliphatique divalent, linéaire ou ramifié, contenant de préférence de 1 à 7 atomes de carbone, tout particulièrement 1 atome de carbone
   • X est un contre-ion hydrogène, métal alcalin ou ammonium.

7. Copolymère selon la revendication 6 dans lequel le monomère (b') est choisi parmi :

      - le vinyl sulfonate de sodium (SVS)
      - l'acide 2-méthyl-2-propène-1-sulfonique (SMS)
      - l'acide 2-acrylamide-2-méthyl-1-propanesulfonique (AMPS)

   et leurs sels hydrosolubles.

8. Copolymère selon l'une des revendications précédentes dans lequel le monomère (a) est choisi parmi l'acide acrylique, l'acide méthacrylique, l'anhydride maléique ou leurs sels hydrosolubles.

9. Copolymère selon la revendication 8 dans lequel le monomère (a) est choisi parmi l'acide acrylique ou l'anhydride maléique.

10. Copolymère selon l'une des revendications précédentes dans lequel, dans la formule (III) représentative du monomère (c), R6 est un groupe (poly)oxyalkylene de formule -[O-A-]$_n$-, dans lequel :

      - A est un groupe de formule -CH$_2$-CH$_2$- ou -CH$_2$-CH(CH$_3$)- ou -CH(CH$_3$)-CH$_2$-, et
      - n est un nombre moyen au moins égal à 1.

11. Copolymère selon la revendication 10 dans lequel R6 est un groupe polyoxyethylene de formule -[O-CH$_2$-CH$_2$],-,

et n est un nombre moyen compris entre 2 et 10.

12. Copolymère selon la revendication 11 dans lequel le monomère (c) est le polyoxyethylene alkyl ether phosphate (PAM 5000).

13. Copolymère selon l'une des revendications précédentes dans lequel les unités monomères (a) représentent entre 20% et 80% (en % molaire des monomères polymérisés), les unités monomères (b) ou (b') représentent entre 10% et 70 % (en % molaire des monomères polymérisés) et les unités monomères (c) représentent entre 10% et 70 % (en % molaire des monomères polymérisés).

14. Copolymère selon l'une des revendications précédentes pour lequel la masse moléculaire moyenne (exprimée en poids) du copolymère selon l'invention est comprise entre 1000 et 50000 g/mol.

15. Procédé de préparation d'un copolymère selon l'une des revendications 1 à 14 comprenant :

    A) au moins une unité monomère a)
    B) au moins une unité monomère b)
    C) au moins une unité monomère c)

par polymérisation par voie radicalaire en présence d'un amorceur de polymérisation qui est un initiateur de radicaux libres de :

    A) au moins un acide aliphatique monocarboxylique ou polycarboxylique éthyléniquement insaturé, d'un anhydride correspondant ou d'un sel hydrosoluble correspondant.
    B) au moins un éther éthyléniquement insaturé sulfoné ou sulfaté de formule (I)

$$CH_2 = C(R^1)\text{-}C(R^2)(R^3)\text{-}O\text{-}R'\text{-}Y^-X^+ \qquad (I)$$

formule dans laquelle les différents symboles ont la signification suivante :

    • $R^1$, $R^2$ et $R^3$ , semblables ou différents, représentent

        ○ un atome d'hydrogène ou
        ○ un radical alkyle

    • R' représente un radical aliphatique divalent, linéaire ou ramifié, portant au moins un substituant OH
    • $Y^-$ représente $SO_3^-$ ou $SO_4^-$
    • X est un contre-ion,

ou au moins un monomère sulfoné éthyléniquement insaturé (b'), autre que (b), de formule (II)

$$CH_2 = C(R^1)\text{-}(Z)_n\text{-}R''\text{-}SO_3\text{-}X^+ \qquad (II)$$

formule dans laquelle les différents symboles ont la signification suivante :

    • $R^1$ représente

        ○ un atome d'hydrogène ou
        ○ un radical alkyle

    • n est égal à 0 ou 1
    • Z représente un groupe divalent de formule - C(O) - N($R^4$) - $R^5$ -, où

        ○ $R^4$ représente un atome d'hydrogène ou un radical alkyle
        ○ $R^5$ représente un radical divalent aliphatique, linéaire ou ramifié

    • R" représente un radical aliphatique divalent, linéaire ou ramifié,

X est un contre-ion, et

C) au moins un monomère (c) de formule générale moyenne (III) : [CH$_2$=CH-CH$_2$-R$^6$-O-]$_x$P(=O)(OM)$_{3-x}$, dans laquelle :

■ R$^6$ est un groupe organique divalent comportant des atomes de carbone et d'hydrogène et éventuellement des hétéroatomes, de préférence l'oxygène et l'azote, de préférence un groupe (poly)oxyalkylene.
■ x est un nombre entier ou décimal compris entre 1 et 2, bornes incluses ou exclues.
■ M, identique ou différent, est un atome d'hydrogène ou un contre-ion cationique.

16. Composition inhibitrice des dépôts inorganiques comprenant un copolymère selon l'une des revendications 1 à 14.

17. Composition inhibitrice des dépôts inorganiques selon la revendication 16 dans laquelle la quantité de copolymère, exprimée à sec, est comprise entre 1 et 70% en masse.

18. Procédé d'inhibition des dépôts inorganiques dans un réservoir pétrolier comprenant la mise en contact d'une quantité efficace de la composition selon l'une des revendications 16 et 17 avec une formation pétrolière.

19. Procédé d'inhibition des dépôts inorganiques selon la revendication 18 dans lequel le réservoir pétrolier est un réservoir HP/HT.

20. Procédé d'inhibition des dépôts inorganiques selon l'une des revendications 18 à 19 dans lequel les dépôts inorganiques sont des dépôts de calcium, de baryum et de fer.

21. Procédé d'inhibition des dépôts inorganiques selon l'une des revendications 18 à 20 comprenant la mise en contact de la composition inhibitrice avec la formation pétrolière selon la méthode de squeeze.

**Claims**

1. Copolymer having:

   A) at least one monomer unit a) derived from at least one ethylenically unsaturated aliphatic monocarboxylic or polycarboxylic acid, a corresponding anhydride, or a corresponding water-soluble salt; and

   B) at least one monomer unit b) derived from an ethylenically unsaturated sulfonated or sulfated monomer unit b) with the formula (I)

   $$CH_2 = C(R^1)-C(R^2)(R^3)-O-R'-Y^--X^+ \qquad (I)$$

   in which formula the various symbols have the following meaning:

   • R$^1$, R$^2$, and R$^3$, similar or different, represent

      ○ a hydrogen atom or
      ○ an alkyl radical

   • R$^1$ represents a linear or branched divalent aliphatic radical having at least one OH substituent
   • Y$^-$ represents SO$_3^-$ or SO$_4^-$
   • X is a counterion

   or at least one monomer unit b') derived from an ethylenically unsaturated sulfonated monomer unit other than (b) with the formula (II)

   $$CH_2 = C(R^1) - (Z)_n - R'' - SO_3^- X^+ \qquad (II)$$

   in which formula the various symbols have the following meaning:

   • R$^1$ represents

○ a hydrogen atom or
○ an alkyl radical

• n is equal to 0 or 1
• Z represents a divalent group with the formula - C(O) - N(R$^4$) - R$^5$ - where

○ R$^4$ represents a hydrogen atom or an alkyl radical
○ R$^5$ represents a linear or branched aliphatic divalent radical

• R" represents a linear or branched divalent aliphatic radical
• X is a counterion, and

C) at least one monomer unit (c) derived from a monomer with the average general formula

$$[CH_2 = CH-CH_2-R^6-O-]_xP(=O)(OM)_{3-x} \qquad (III)$$

wherein:

• R$^6$ is a divalent organic group having carbon and hydrogen atoms and possibly heteroatoms, preferably oxygen and nitrogen, preferably a (poly)oxyalkylene group
• x is a whole or decimal number between 1 and 2 inclusive or exclusive
• M, identical or different, is a hydrogen atom or a cationic counterion.

2. Copolymer according to claim 1 wherein, in formula (I) representing monomer (b):

• R$^1$ represents

○ a hydrogen atom or
○ an alkyl radical containing 1 to 6 carbon atoms, preferably 1 to 3 carbon atoms, in particular 1 carbon atom

• R$^2$, and R$^3$, similar or different, represent

○ a hydrogen atom or
○ an alkyl radical containing 1 to 6 carbon atoms, preferably 1 to 3 carbon atoms,

• R' represents a linear or branched divalent aliphatic radical having at least one OH substituent and containing 1 to 6 carbon atoms, particularly 3 carbon atoms
• Y$^-$ represents SO$_3^-$ or SO$_4^-$ especially preferably SO$_3^-$
• X is a hydrogen, alkali metal, or ammonium counterion.

3. Copolymer according to claim 2 wherein monomer (b) is chosen from 3-(meth)allyloxy-2-hydroxy-1-propanesulfonic acids and their water-soluble salts, ammonium sulfate, and 1-(allyloxy)-2-hydroxypropyl (or "ammonium 1-(allyloxy)-2-hydroxypropyl sulfate").

4. Copolymer according to claim 3 wherein monomer (b) is the sodium salt of 1-allyloxy-2-hydroxy-1-propanesulfonic acid (AHPS).

5. Copolymer according to claim 1 wherein, in formula (II) representing monomer (b'):

• R$^1$ represents

○ a hydrogen atom or
○ an alkyl radical

• n is equal to 0 or 1
• Z represents a divalent group with the formula - C(O) - N(R$^4$) - R$^5$ - where

○ R$^4$ represents a hydrogen atom or an alkyl radical

○ $R^5$ represents a linear or branched aliphatic divalent radical

• R" represents a linear or branched divalent aliphatic radical
• X is a counterion.

6. Copolymer according to claim 5 wherein, in formula (II) representing monomer (b'):

• $R^1$ represents

○ a hydrogen atom or
○ an alkyl radical containing 1 to 6 carbon atoms, preferably 1 to 3 carbon atoms, in particular 1 carbon atom

• n is equal to 0 or 1; preferably n is equal to 1
• Z represents a divalent group with the formula- C(O) -N(R4) - $R^5$ - where

○ $R^4$ represents a hydrogen atom or an alkyl radical containing 1 to 4 carbon atoms
○ $R^5$ represents a linear or branched aliphatic divalent radical containing 1 to 8 carbon atoms, preferably a $C(CH_{3-2-}$ [*sic - parenthesis not closed - translator*] radical

• R" represents a linear or branched divalent aliphatic radical, preferably containing 1 to 7 carbon atoms, in particular 1 carbon atom
• X is a hydrogen, alkali metal, or ammonium counterion.

7. Copolymer according to claim 6 wherein the monomer (b') is chosen from:

- 2-methyl-2-propene-1-sulfonic acid (SMS)
- 2-acrylamide-2-methyl-1-propanesulfonic acid (AMPS)

and their water-soluble salts.

8. Copolymer according one of the foregoing claims wherein the monomer (a) is chosen from acrylic acid, methacrylic acid, maleic anhydride, or their water-soluble salts.

9. Copolymer according to claim 8 where the monomer a) is chosen from acrylic acid or maleic anhydride.

10. Copolymer according to one of the foregoing claims wherein, in formula (III) representing monomer (c), $R^6$ is a (poly) oxyalkylene group with the formula $-[O-A-]_n^-$ wherein:

- A is a group with the formula $-CH_2-CH_2-$ or $-CH_2-CH(CH_3)-$ or $-CH(CH_3)-CH_2-$ and
- n is an average number at least equal to 1.

11. Copolymer according to claim 10 wherein $R^6$ is a polyoxyethylene group with the formula $-[O-CH_2-CH_2]_n^-$ wherein n is an average number between 2 and 10.

12. Copolymer according to claim 11 wherein the monomer (c) is polyoxyethylene alkyl ether phosphate (PAM 5000).

13. Copolymer according to one of the foregoing claims wherein the monomer units (a) represent between 20% and 80% (as a molar percentage of the polymerized monomers), the monomer units (b) or (b') represent between 10% and 70% (as a molar percentage of the polymerized monomers), and the monomer units (c) represent between 10% and 70% (as a molar percentage of the polymerized monomers).

14. Copolymer according to one of the foregoing claims wherein the average molecular mass (expressed by weight) of the copolymer according to the invention is preferably between 1000 and 50,000 g/mol.

15. Method for preparing a copolymer according to one of claims 1 to 14 having:

A) at least one monomer unit a)
B) at least one monomer unit b)

C) at least one monomer unit c)

by radical polymerization in the presence of a polymerization initiator which is a free-radical initiator of:

A) at least one ethylenically unsaturated monocarboxylic or polycarboxylic aliphatic acid, a corresponding anhydride, or a corresponding water-soluble salt;
B) at least one ethylenically unsaturated sulfonated or sulfated ether with the formula (I)

$$CH_2 = C(R^1) - C(R^2)(R) - O - R' - Y^- X^+ \qquad (I)$$

in which formula the various symbols have the following meaning:

- R$^1$, R$^2$, and R$^3$, similar or different, represent

  o a hydrogen atom or
  o an alkyl radical

- R$^1$ represents a linear or branched divalent aliphatic radical having at least one OH substituent
- Y$^-$ represents $SO_3^-$ or $SO_4^-$
- X is a counterion

or at least one monomer unit b') derived from an ethylenically unsaturated sulfonated monomer unit other than (b) with the formula (II)

$$CH_2 = C(R^1) - (Z)_n - R'' - SO_3^- X^+ \qquad (II)$$

in which formula the various symbols have the following meaning:
- R$^1$ represents

  ○ a hydrogen atom or
  ○ an alkyl radical

- n is equal to 0 or 1
- Z represents a divalent groupe with the formula C(O) - N(R$^4$) - R$^5$ - where

  ○ R$^4$ represents a hydrogen atom or an alkyl radical
  ○ R$^5$ represents a linear or branched aliphatic divalent radical

- R'' represents a linear or branched divalent aliphatic radical
- X is a counterion, and
C) at least one monomer unit (c) with the average general formula (III):

$$[CH_2 = CH-CH_2-R^6-O-]_x P(=O)(OM)_{3-x}$$

wherein:

- R$^6$ is a divalent organic group having carbon and hydrogen atoms and possibly heteroatoms, preferably oxygen and nitrogen, preferably a (poly)oxyalkylene group
- x is a whole or decimal number between 1 and 2 inclusive or exclusive
- M, identical or different, is a hydrogen atom or a cationic counterion.

16. Composition that inhibits inorganic deposits having a copolymer according to one of claims 1 to 14.

17. Composition that inhibits inorganic deposits according to claim 16 wherein the amount of copolymer, on a dry weight basis, is between 1 and 70 wt.%.

18. Method for inhibiting inorganic deposits in a petroleum reservoir including the contacting of an effective amount of the inhibiting composition according to one of claims 16 and 17 with a petroleum formation.

19. Method for inhibiting inorganic deposits according to claim 18 wherein the petroleum reservoir is an HP/HT reservoir.

20. Method for inhibiting inorganic deposits according to one of claims 18 to 19 wherein the inorganic deposits are calcium, barium, and iron deposits.

21. Method for inhibiting inorganic deposits according to one of claims 18 to 20 including the contacting of the inhibiting composition with the petroleum formation by the squeeze method.

**Patentansprüche**

1. Copolymer umfassend:

A) mindestens eine monomere Einheit a) abgeleitet von mindestens einer aliphatischen ethylenisch ungesättigten Monocarboxyl- oder Polycarboxylsaure, einem entsprechenden Anhydrid oder einem entsprechenden wasserlöslichen Salz:
sowie

B) mindestens eine monomere Einheit b) abgeleitet von einem ethylenisch ungesättigten Suifon- oder Sulfatether der Formel (1)

$$CH_2 = C(R^1) - C(R^2)(R^3) - O - R' - Y' X' \qquad (I)$$

wobei die verschiedenen Symbole der Formel die folgende Bedeutung aufweisen:

• $R^1$, $R^2$ und $R^3$, gleich oder voneinander verschieden, stellen dar

○ ein Wasserstoffatom oder r
○ eine Alkylgruppe

• R' stellt eine aliphatische divalente Gruppe dar, linear oder verzweigt, die mindestens einen Substituenten OH trägt
• $Y^-$ stellt $SO_3$ oder $SO_4^-$ dar
• X ist ein Gegenion

oder mindestens eine monomere Einheit (b'), die von einem ethylenisch ungesättigten Sulfonmonomer abgeleitet ist, anders als (b), mit der Formel (II)

$$CH_2=C(R^1)-(Z)_n-R'-SO_3^-X^+ \qquad (II)$$

wobei die verschiedenen Symbole der Formel die folgende Bedeutung aufweisen:

• $R^1$ stellt dar

○ ein Wasserstoffatom oder
○ eine Alkylgruppe

• n ist gleich 0 oder 1
• Z stellt eine divalente Gruppe der Formel -C(O) - N($R^4$) - $R^5$ - dar, wobei

○ $R^4$ ein Wasserstoffatom oder eine Alkylgruppe darstellt
○ $R^5$ eine divalente aliphatische Gruppe darstellt linear oder verzweigt

• R' stellt eine aliphatische divalente Gruppe dar, linear oder verzweigt
• X ist ein Gegenion
sowie

C) mindestens eine monomere Einheit (c), die von einem Monomer der mittleren allgemeinen Formel [CH$_2$=CH-CH$_2$-R$^6$-O-]$_x$P(=O)(OM)$_{3-x}$ (III) abgeleitet ist, wobei:

■ R$^6$ eine divalente organische Gruppe ist, die Kohlenstoff- und Wasserstoffatome umfasst sowie gegebenenfalls Hetereatome, vorzugsweise Sauerstoff und Stickstoff, bevorzugt eine Polyoxyalkylengruppe,
■ x eine ganze Zahl oder eine Dezimalzahl zwischen 1 und 2 ist, wobei die Randwerte eingeschlossen oder ausgeschlossen sind,
■ M, identisch oder unterschiedlich, ein Wasserstoffatom oder ein kationisches Gegenion ist.

2. Copolymer nach Anspruch 1, wobei in der Formel (I) repräsentativ für das Monomer (b):

• R$^1$

○ ein Wasserstoffatom oder
○ eine Alkylgruppe darstellt, die 1 bis 6 Kohlenstoffatome, vorzugswelse 1 bis 3 Kohlenstoffatome, insbesondere 1 Kohlenstoffatom aufweist

• R$^2$ und R$^3$, gleich oder voneinander verschieden,

○ ein Wasserstoffatom darstellen oder
○ eine Alkylgruppe, die 1 bis 6 Kohlenstoffatome, vorzugsweise 1 bis 3 Kohlenstoffatome aufweist

• R' eine aliphatische divalente Gruppe darstellt, linear oder verzweigt, das mindestens einen Substituenten OH trägt, der 1 bis 6 Kohlenstoffatome, insbesondere 3 Kohlenstoffatome aufweist
• Y$^-$ SO$_3^-$ oder SO$_4^-$ darstellt, insbesondere SO$_3^-$
• X ein Wasserstoff-, Alkalimetall- oder Ammoniumgegenion ist.

3. Copolymer nach Anspruch 2, wobei das Monomer (b) ausgewählt ist aus 3-(Methallyloxy-2-hydroxy-1-propansulfonsäuren und deren wasserlöslichen Salzen, Ammoniumsulfat und 1-Allyloxy-2-hydroxypropyl (oder "Ammonium-1-allyloxy-2-hydroxypropylsulat").

4. Copolymer nach Anspruch 3, wobei das Monomer (b) das Natriumsalz von 1-Allyloxy-2-hydroxy-1-prppansulfonsäure (AHPS) ist.

5. Copolymer nach Anspruch 1, wobei in der Formel (II) repräsentativ für das Monomer (b'):

• R$^1$

○ ein Wasserstoffatom oder
○ eine Alkylgruppe darstellt

• n gleich 0 oder 1 ist
• Z eine divalente Gruppe der Formel -C(O) - N(R$^4$) - R$^5$- darstellt, wobei

○ R$^4$ ein Wasserstoffatom oder eine Alkylgruppe darstellt
○ R$^5$ eine divalente aliphatische Gruppe darstellt, linear oder verzweigt

• R' eine aliphatische divalente Gruppe darstellt, linear oder verzweigt
• X ein Gegenion ist.

6. Copolymer nach Anspruch 5, wobei in der Formel (II) repräsentativ für das Monomer (b'):

• R$^1$

○ ein Wasserstoffatom oder
○ eine Alkylgruppe darstellt, die 1 bis 6 Kohlenstoffatome, vorzugsweise 1 bis 3 Kohlenstoffatome, insbesondere 1 Kohlenstoffatom aufweist

- n gleich 0 oder 1 ist, vorzugsweise ist n gleich 1
- Z eine divalente Gruppe der Formel -C(O) - N(R$^4$) - R$^5$- darsttellt, wobei

○ R$^4$ ein Wasserstoffatom oder ein Alkylgruppe darstellt, das 1 bis 4 Kohlenstoffatome aufweist
○ R$^5$ ein divalentes aliphatisches Radikal darstellt, linear oder verzweigt, das 1 bis 8 Kohlenstoffatome aufweist, vorzugsweise eine Gruppe - C(CH$_3$)$_2$.

- R' eine aliphatische divalente Gruppe darstellt, linear oder verzweigt, die 1 bis 7 Kohlenstoffatome, insbesondere 1 Kohlenstoffatom aufweist
- X ein Wasserstoff-, Alkallmetall- oder Ammoniumgegenion ist.

7. Copolymer nach Anspruch 6, wobei das Monomer (b') ausgewählt ist aus:

- Natriumvinylsulfonat (SVS)
- 2-Methyl-2-propen-1-sulfonsäure (SMS)
- 2-Acrylamid-2-methyl-1-propansulfonsäure (AMPS)

sowie deren wasserlöslichen Salzen.

8. Copolymer nach einem der vorherigen Ansprüche, wobei das Monomer (a) ausgewählt ist aus Acrylsäure, Methacrylsäure, Maleinanhydrid oder deren wasserlöslichen Salzen.

9. Copolymer nach Anspruch 8, wobei das Monomer (a) ausgewählt ist aus Acrylsäure oder Maleinanhydrid.

10. Copolymer nach einem der vorherigen Ansprüche, wobei in der Formel (III) repräsentativ für das Monomer (c), R$_6$ eine Polyoxyalkylengruppe der Formel -[O-A-]$_n$- ist, wobei:

- A eine Gruppe ist der Formel: -CH$_2$-CH$_2$- oder -CH$_2$-CH(CH$_3$) - oder -CH(CH$_3$)-CH$_2$- und
- n einen mittleren Wert annimmt, der mindestens gleich 1 ist.

11. Copolymer nach Anspruch 10, wobei R6 eine Polyoxyethylengruppe der Formel -[O-CH$_2$-CH$_2$]n ist und n einen mittleren Wert annimmt, der zwischen 2 und 10 ist.

12. Copolymer nach Anspruch 11, wobei das Monomer (c) Polyoxyethylenalkyletherphosphat (PAM 5000) ist.

13. Copolymer nach einem der vorherigen Ansprüche, wobei die monomeren Einheiten (a) zwischen 20 % und 80 % (in Mol% der polymerisierten Monomere) darstellen, die monomeren Einheiten (b) oder (b') zwischen 10 % und 70 % (in Mol% der polymerisierten Monomere) darstellen und die monomeren Einheiten (c) zwischen 10 % und 70 % (in Mol% der polymerisierten Monomer) darstellen.

14. Copolymer nach einem der vorherigen Ansprüche, wobei die durchschnittliche Molekularmasse des erfindungsgemäßen Copolymers (als Gewicht ausgedrückt) zwischen 1000 und 50000 g/mol beträgt.

15. Verfahren zur Herstellung eines Copolymers nach einem der Ansprüche 1 bis 14 umfassend:

A) mindestens eine monomere Einheit a)
B) mindestens eine monomere Einheit b)
C) mindestens eine monomere Einheit c)

durch radikalische Polymerisation in Gegenwart eines Polymerisationsstarters, der ein Initiator freier Radikalen ist aus:

A) mindestens einer aliphatischen, ethylenisch ungesättigten Monocarboxyl- oder Polycarboxylsäure, einem entsprechenden Anhydrid oder einem entsprechenden wasserlöslichen Salz
B) mindestens einem ethylenisch ungesättigten Sulfon- oder Sulfatether der Formel (I)

$$CH_2 = C(R^1) - C(R^2)(R^3) - O - R' - Y^- X^+ \qquad (I)$$

wobei die verschiedenen Symbole der Formel die folgende Bedeutung aufweise:

- $R^1$, $R^2$ und $R^3$, gleich oder voneinander verschieden, stellen dar

    ○ ein Wasserstoffatom oder
    ○ ein Alkylgruppe

- R' stellt eine aliphatische divalente Gruppe dar, linear oder verzweigt, die mindestens einen Substituenten OH trägt
- Y stellt $SO_3^-$ oder $SO_4^-$ dar
- X ist ein Gegenion

oder mindestens ein ethylenisch ungesättigtes Sulfonmonomer (b'), anders als (b), mit der Formel (II)

$$CH_2 C(R^1) - (Z)n - R' - SO_3^- X^+ \qquad (II)$$

wobei die verschiedenen Symbole der Formel die folgende Bedeutung aufweisen:

- $R^1$ stellt dar
○ ein Wasserstoffatom oder
○ eine Alkylgruppe
- n ist gleich 0 oder 1
- Z stellt eine divalente Gruppe der Formel $-C(O) - N(R^4) - R^5$- dar, wobei

    ○ $R^4$ ein Wasserstoffatom oder eine Alkylgruppe darstellt
    ○ $R^5$ eine divalente aliphatische Gruppe darstellt, linear oder verzweigt

- R' stellt eine aliphatische divalente Gruppe dar, linear oder verzweigt

X ist ein Gegenion
sowie
C) mindestens eine monomere Einheit (e) der mittleren allgemeinen Formel (III) $[CH_2=CH-CH_2-R^6-O-]_x P(=O)(OM)_{3-x'}$, wobei:

■ $R^6$ eine divalente organische Gruppe ist, die Kohlenstoff- und Wasserstoffatome umfasst sowie gegebenenfalls Heteroatome, vorzugsweise Sauerstoff und Stickstoff, bevorzugt eine Polyoxyalkylengruppe,
■ x eine ganze Zahl oder eine Dezimalzahl zwischen 1 und 2 ist, wobei die Randwerte eingeschlossen oder ausgeschlossen sind,
■ M, Identisch oder unterschiedlich, ein Wasserstoffatom oder ein kationisches Gegenion ist.

16. Zusammensetzung, die anorganische Ablagerungen hemmt, welche ein Copolymer nach einem der Ansprüche 1 bis 14 umfasst.

17. Zusammensetzung, die anorganische Ablagerungen hemmt, nach Anspruch 16, wobei die Menge des Copolymers, als Trockengewicht ausgedrückt, eine Masse zwischen 1 und 70 % aufweist.

18. Verfahren zur Hemmung anorganischer Ablagerungen in einem Ölreservoir, wobei eine wirksame Menge der Zusammensetzung nach einem der Ansprüche 16 und 17 mit einer Ölbildung in Kontakt gebracht wird.

19. Verfahren zur Hemmung anorganischer Ablagerungen nach Anspruch 18, wobei das Ölreservoir ein HP/HT Reservoir ist.

20. Verfahren zur Hemmung anorganischer Ablagerungen nach einem der Ansprüche 18 und 19, wobei es sich bei den anorganischen Ablagerungen um Ablagerungen von Calcium, Barium und Eisen handelt.

21. Verfahren zur Hemmung anorganischer Ablagerungen nach einem der Ansprüche 18 bis 20, wobei die hemmende Zusammensetzung mit der Ölbildung nach dem Squeezeverfahren in Kontakt gebracht wird.

FIG. 1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6063289 A
- US 6123869 A
- US 4209398 A
- WO 2003029153 A
- WO 2008135403 A